# EUROPÄISCHE PATENTANMELDUNG

(11) **EP 3 985 541 A1**
(43) Veröffentlichungstag der Anmeldung: **20.04.2022**
(21) Anmeldenummer: 20201967.5
(22) Anmeldetag: 15.10.2020
(51) Int. Cl.: G06F 21/76, G06F 30/34, G06F 11/14, G06F 11/16

(54) **VERFAHREN ZUR INTEGRITÄTSPRÜFUNG VON NACHLADBAREN FUNKTIONSEINHEITEN**

(71) Anmelder: Siemens Aktiengesellschaft, 80333 München (DE)
(72) Erfinder: Fischer, Bernhard, 1060 Wien (AT); Matschnig, Martin, 3430 Tulln (AT); Djavan, Joubin, 2403 Regelsbrunn (AT); Cech, Christian, 2483 Ebreichsdorf (AT); Hinterstoisser, Thomas, 2102 Bisamberg (AT)
(74) Vertreter: Maier, Daniel Oliver

(57) **Zusammenfassung**

Die Erfindung betrifft ein Verfahren zur Integritätsprüfung von Funktionseinheiten (HWAA1, HWAA2), welche während einer Laufzeit des elektronischen Bauteils (BE) in einen dynamisch rekonfigurierbaren Bereich (DPR) des elektronischen Bauteils (BE) nachgeladen werden können. Das elektronische Bauteil (BE), welches als programmierbare, logische Schaltung ausgeführt ist, weist neben einem statischen Bereich (SBE) zumindest einen dynamisch rekonfigurierbaren Bereich (DPR) auf. Die nachladbaren Funktionseinheiten (HWAA1, HWAA2) weisen vordefinierte Schnittstellen auf, welche mit entsprechenden Schnittstellen (IIF, OIF) jener Teilbereiche (C1, C2) des dynamisch rekonfigurierbaren Bereichs (DPR) zusammenpassen, in welche die nachladbaren Funktionseinheiten (HWAA1, HWAA2) geladen werden können. Für jede nachladbare Funktionseinheit (HWAA1) wird in einem vorgegebenen Teilbereich (Ct) des dynamisch rekonfigurierbaren Bereichs (DPR) eine zugehörige Zwillingsfunktionseinheit (HWAAT) konfiguriert (101). Eine nachladbare Funktionseinheit (HWAA1) wird in einen vorgegebenen Teilbereich (C1, C2) des dynamisch rekonfigurierbaren Bereichs (DPR) geladen (102), mit identen Eingangsdaten (IN) wie die zugehörige Zwillingsfunktionseinheit (HWAAT) versorgt und parallel zu dieser ausgeführt (103). Die Ausgangsdaten (O_HWAA1, O_HWAAT) der nachgeladenen Funktionseinheit (HWAA1) und der zugehörigen Zwillingsfunktionseinheit (HWAAT) werden verglichen (104) und die nachgeladene Funktionseinheit (HWAA1) freigegeben (105), wenn eine Übereinstimmung der Ausgangsdaten (O_HWAA1, O_HWAAT) der nachgeladenen Funktionseinheit (HWAA1) und der zugehörigen Zwillingsfunktionseinheit (HWAAT) festgestellt wird.

## Beschreibung

### Technisches Gebiet

Die vorliegende Erfindung betrifft allgemein das Gebiet der programmierbaren logischen Schaltungen wie z.B. Field Programmable Gate Arrays (FPGAs). Im Speziellen bezieht sich die vorliegende Erfindung auf ein Verfahren zur Integritätsprüfung von nachladbaren Funktionseinheiten bzw. Hardware-Applikationen, welche in Form von Konfigurationsdateien während einer Laufzeit des elektronischen Bauteils in einen dynamisch rekonfigurierbaren Bereich des elektronischen Bauteils nachgeladen werden können. Das elektronische Bauteil ist dabei als programmierbare, logischen Schaltung, insbesondere als Field Programmable Gate Array (FPGA) oder als System-on-Chip-FPGA (SoC-FPGA) ausgeführt, und weist neben einem statischen Bereich zumindest einen dynamisch rekonfigurierbaren Bereich auf. Die nachladbaren Funktionseinheiten weisen vordefinierte Schnittstellen auf, welche mit entsprechenden Schnittstellen jener Teilbereiche des dynamisch rekonfigurierbaren Bereichs des elektronischen Bauteils zusammenpassen, in welche die nachladbaren Funktionseinheiten geladen werden können.

### Stand der Technik

Integrierte Schaltungen, wie z.B. anwendungsspezifische, integrierte Schaltungen (kurz ASICs), so genannte Field Programmable Gate Arrays (kurz FPGAs) oder so genannte System-on-Chip-FPGAs (kurz SoC-FPGAs), sind elektronische Bauteile, welche heutzutage in vielen elektrischen und/oder elektronischen Geräten oder Systemen eingesetzt werden. Vor allem mit Hilfe von elektronischen Bauteilen, welche als programmierbare, integrierte Schaltungen (z.B. FPGAs, SoC-FPGAs) ausgeführt sind, können durch entsprechende Konfiguration verschiedene logische Schaltungen und Funktionen realisiert werden, welche z.B. von einfachen Zählern oder Schnittstellen für Digitalbausteine bis zu hochkomplexen Schaltungen (z.B. Speicher-Kontroller, Mikroprozessoren, etc.) reichen. Programmierbarkeit bezieht sich dabei nicht nur auf eine Vorgabe zeitlicher Abläufe, sondern vor allem auf eine Definition einer Schaltungsstruktur, um eine gewünschte Schaltungsfunktion bzw. Funktion zu erzielen.

Die Definition der gesamten Schaltung bzw. Schaltungsfunktion des elektronischen Bauteils erfolgt in einer so genannten Designphase und wird z.B. in einer Hardwarebeschreibungssprache (z.B. VHDL, Verilog, etc.) formuliert. In einer so genannten Synthesephase wird die Definition der logischen Schaltung beispielsweise mittels einer Erzeugersoftware bzw. eines Synthesewerkzeugs in eine so genannte Netzliste übersetzt, aus welcher dann schließlich durch so genanntes Placement und Routing ein physikalisches Layout erzeugt wird. Aus der Netzliste wird dann eine entsprechende Konfigurationsdatei abgeleitet, durch welche eine Konfiguration bzw. Verschaltung der physikalischen Elemente des elektronischen Bauteils bzw. der programmierbaren, integrierten Schaltung - für die gesamte Schaltung, aber zumindest für einzelne Schaltungsteile bzw. Funktionseinheiten vorgegeben werden kann.

Durch Laden von zumindest einer Konfigurationsdatei in das elektronische Bauteil können aufgrund einer entsprechenden Grundstruktur des elektronischen Bauteils logische Schaltungsfunktionen, bestehend aus verschiedenen Funktionseinheiten bzw. Schaltungsteilen, realisiert werden. Die Grundstruktur einer programmierbaren, integrierten Schaltung wie z.B. einem FPGA oder einem SoC-FPGA ist dabei als Feld (engl. Array) aus bis zu Millionen konfigurierbaren Basiselementen ausgeführt. Das Laden der jeweiligen Konfigurationsdateien kann aus einer internen oder externen, nicht flüchtigen Speichereinheit erfolgen.

Programmierbare, integrierte Schaltungen wie z.B. FPGAs, SoC-FPGAs bieten aufgrund ihrer Grundstruktur den Vorteil, dass die logische Schaltungsfunktion oder nur einzelne Schaltungsteile - d.h. einzelne Funktionseinheiten - bei Bedarf verändert werden können. Um eine Funktionsweise einer programmierbaren, integrierten Schaltung zu rekonfigurieren, wird beispielsweise eine aktuelle Konfiguration des elektronischen Bauteils gelöscht und eine neue Konfigurationsdatei geladen, mit welcher der Bauteil neu konfiguriert wird. Dabei ist es möglich, anstatt einer Konfigurationsdatei zum Konfigurieren des gesamten elektronischen Bauteils, eine oder mehrere Konfigurationsdateien zu verwenden, durch welche nur Teilbereiche des elektronischen Bauteils bzw. der programmierbaren, integrierten Schaltung neu konfiguriert werden, während andere Bereiche des elektronischen Bauteils unverändert - d.h. statisch - bleiben. Diese Vorgangsweise wird als so genannte partielle Rekonfiguration bezeichnet. In der Designphase der gesamten Schaltungsfunktion des elektronischen Bauteils kann beispielsweise festgelegt werden, welcher Bereich des elektronischen Bauteils unverändert - d.h. statisch - bleiben soll und welcher Bereich verändert werden kann - d.h. rekonfigurierbar sein soll, wobei der rekonfigurierbare Bereich in mehrere Teilbereiche unterteilt sein kann.

Für die partielle Rekonfiguration kann ein elektronischer Bauteil bzw. eine programmierbare, integrierte Schaltung beispielsweise entweder außer Betrieb gesetzt bzw. abgeschaltet werden oder die partielle Rekonfiguration wird bei einem aktiven, elektronischen Bauteil während des Betriebs bzw. zur Laufzeit durchgeführt. D.h. einer oder mehrere als rekonfigurierbar festgelegte Teilbereiche werden während der Laufzeit verändert, während die restliche Schaltung - wie z.B. der als statisch festgelegte Bereich und gegebenenfalls dynamisch rekonfigurierbare Teilbereiche, welche nicht neu konfiguriert werden sollen, in Betrieb bleiben. Eine partielle Rekonfiguration bei einem aktiven elektronischen Bauteil bzw. während einer Laufzeit des elektronischen Bauteils wird als so genannte dynamische, partielle Rekonfiguration (kurz: DPR) bezeichnet. Unter Laufzeit bzw. laufendem Betrieb des elektronischen Bauteils, wie z.B. eines FPGAs, etc., kann insbesondere ein Zeitraum nach dem Laden der Konfiguration (in Form von zumindest einer Konfigurationsdatei) verstanden werden, also ein Zeitraum, zu welchem das elektronische Bauteil gemäß der durch die zumindest eine Konfigurationsdatei festgelegten Konfiguration verwendet werden kann.

Durch die DPR können im laufenden Betrieb des elektronischen Bauteils Funktionseinheiten - so genannte Hardware-Applikationen - dynamisch in entsprechenden Teilbereiche des als dynamisch rekonfigurierbar festgelegten Bereichs des elektronischen Bauteils nachgeladen und dann freigegeben werden. Die dynamisch rekonfigurierbaren Teilbereiche werden z.B. auch als Container, Slots oder Partitionen bezeichnet und werden in der Designphase des elektronischen Bauteils definiert. Nachladbare Funktionseinheiten bzw. Hardware-Applikationen werden beispielsweise von einer Steuereinheit als Konfigurations- oder Ladedateien aus einer internen oder externen Speichereinheit (z.B. Flashspeicher, SD-Karte, herstellerspezifischen Applikationsstore) während des laufenden Betriebs in entsprechende dynamisch rekonfigurierbare Teilbereich bzw. Container geladen und diese dann entsprechend konfiguriert. Die Steuereinheit ist vom jeweiligen Hersteller des elektronischen Bauteils (z.B. Xilinx, Intel (vormals Altera), etc.) im statischen Bereich der integrierten Schaltung integriert bzw. vorgesehen. Die Konfigurationsdatei ist üblicherweise als Bitstrom- oder Bitstream-Datei ausgeführt, mit welcher ein Algorithmus und damit eine vorgegebene Funktionsweise der Hardware-Applikation im entsprechenden Container und damit in der Grundstruktur des elektronischen Bauteils abgebildet wird.

Weiterhin weisen die nachladbaren Funktionseinheiten bzw. Hardware-Applikationen vordefinierten Schnittstellen für Eingangs- und Ausgangssignale auf, welche mit implementierten Schnittstellen für Eingangs- und Ausgangssignale des jeweiligen dynamisch rekonfigurierbaren Teilbereichs bzw. Containers in der dynamisch rekonfigurierbaren Bereich des elektronischen Bauteils entsprechend zusammenpassen müssen. D.h. nicht jede Hardware-Applikation kann in jeden Container geladen werden bzw. ein Container kann nur mit einer entsprechenden Konfigurationsdatei einer Hardware-Applikation konfiguriert werden, welche über die passenden Schnittstellenkonfiguration für die jeweiligen Eingangs- und Ausgangssignale verfügt.

Für einen sicheren Ladevorgang einer nachladbaren Funktionseinheit bzw. Hardware-Applikation in einen partiell rekonfigurierbaren Container wird üblicherweise eine Prüfsumme der zugehörigen Konfigurationsdatei erstellt und dann die zugehörige Konfigurationsdatei verschlüsselt. Beim Laden der Hardware-Applikation bzw. der zugehörigen Konfigurationsdatei wird diese z.B. in einer vertrauenswürdigen Programmierumgebung innerhalb des dynamisch rekonfigurierbaren Bereichs der elektronischen Schaltung z.B. von der Steuereinheit entschlüsselt und eine Integrität der Konfigurationsdatei und damit der Hardware-Applikation mittels der Prüfsumme (z.B. mittels zyklischer Redundanzprüfung (CRC)) überprüft. Wird anhand dieser Prüfung die Integrität - d.h. eine Korrektheit (Fehlerfreiheit, keine Modifikationen) und Vertrauenswürdigkeit der Funktionseinheit bzw. der zugehörigen Konfigurationsdatei - festgestellt, so wird der für die Hardware-Applikation vorgesehene dynamisch rekonfigurierbare Container mit der nachgeladenen Funktionseinheit belegt - d.h. mit der zugehörigen Konfigurationsdatei entsprechend konfiguriert.

Eine Vorgehensweise zur Integritätsprüfung ist beispielsweise in der Schrift "Error Detection and Recovery Using CRC in Altera FPGA Devices", Altera, Application note 357, July 2008, Version 1.4 bekannt, mit welchem eine Integrität bzw. Vertrauenswürdigkeit einer Konfigurationsdatei einer nachladbaren Funktionseinheit vom elektronischen Bauteil überprüft wird, wobei auch Fehler in der Datei detektiert und bis zu einer vorgegebenen Anzahl an Bits behoben werden können. Derartige in das Bauteil eingebaute Prüfungen der Integrität für Funktionseinheiten bzw. zugehörige Konfigurationsdateien benötigen allerdings zusätzliche Ressourcen innerhalb des elektronischen Bauteils bzw. der programmierbaren, integrierten Schaltung.

Weiterhin kann die Integrität einer nachladbaren Funktionseinheit bzw. Hardware-Applikation nach der Konfiguration des entsprechenden Containers beschädigt werden - beispielsweise durch eine fehlerhafte Programmierung des Containers. Dadurch kann z.B. die Hardware-Applikation nicht mehr korrekt ablaufen und zu Störungen, Fehlfunktionen und Schäden im elektronischen Bauteil führen. Auch während der Laufzeit einer nachladbaren Funktionseinheit kann diese z.B. ihre vorgegebenen Funktionsweise bzw. Funktionalität z.B. durch Materialalterung des elektronischen Bauteils, insbesondere der rekonfigurierbaren Grundstruktur, oder z.B. durch Einwirkung von ionisierender Strahlung oder Temperaturveränderungen verlieren. Dabei kann es z.B. zu Bitfehlern - so genanntem Bitflips - kommen, welche zu einem falschen Status der Funktionseinheit, zu fehlerhaften Ausgangssignalen, etc. führen können. Da die Integritätsprüfung mittels Prüfsumme üblicherweise beim Laden der Konfigurationsdatei der Funktionseinheit aus einer internen oder externen Speichereinheit durchgeführt wird, bleiben derartige Integritätsprobleme meist solange unentdeckt, bis Fehlfunktionen, Schäden, etc. beim elektronischen Bauteil auftreten.

Weiterhin können auch Manipulationen an nachladbaren Funktionseinheiten bzw. an zugehörigen Konfigurationsdateien, welche vor Erstellen der Prüfsumme und der Verschlüsselung der Datei vorgenommen wurden, oder das Laden einer falschen Version einer Funktionseinheit bzw. Hardware-Applikation durch eine Integritätsprüfung mittels Prüfsummenchecks nur dadurch festgestellt werden, dass die Funktionseinheit bzw. Hardware-Applikation fehlerhaft bzw. nicht wie spezifiziert arbeitet. Dadurch können allerdings bereits Schäden im oder am elektronischen Bauteil oder in der damit realisierten Schaltung entstanden sein.

### Darstellung der Erfindung

Der Erfindung liegt daher die Aufgabe zugrunde, ein Verfahren zur Integritätsprüfung von nachladbaren Funktionseinheiten bzw. Hardware-Applikationen anzugeben, welche zur Laufzeit mittels zugehöriger Konfigurationsdateien in entsprechende Teilbereiches eines dynamisch rekonfigurierbaren Bereichs eines elektronischen Bauteils geladen werden, durch welches auf einfache und sichere Weise sowie mit geringem Ressourceneinsatz rasch eine fehlerfreie und korrekte Funktionsweise einer nachladbaren Funktionseinheit im elektronischen Bauteil erkannt wird.

Diese Aufgabe wird durch ein Verfahren der eingangs genannten Art mit den Merkmalen gemäß dem unabhängigen Patentanspruch gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren der eingangs angeführten Art zur Integritätsprüfung von nachladbaren Funktionseinheiten bzw. Hardware-Applikationen. Diese Funktionseinheiten werden während einer Laufzeit in ein als programmierbare, integrierte Schaltung ausgeführtes, elektronisches Bauteil in Teilbereiche, so genannte Container, Slots oder Partitionen, eines dynamisch rekonfigurierbaren Bereichs des elektronischen Bauteils nachgeladen. Dabei weisen die nachladbaren Funktionseinheiten vordefinierte Schnittstellen auf, welche mit entsprechenden Schnittstellen jener Teilbereiche des dynamisch rekonfigurierbaren Bereichs zusammenpassen, in welchen die nachladbaren Funktionseinheiten geladen werden können - d.h. eine jeweilige nachladbare Funktionseinheit bzw. Hardware-Applikation kann nur in einen Teilbereich oder Container bzw. Slot mit den entsprechend passenden Schnittstellen nachgeladen werden. Für die Integritätsprüfung einer nachladbaren Hardware-Applikation wird in einem vorgegebenen Teilbereich (Container oder Slot) des dynamisch rekonfigurierbaren Bereichs z.B. während eines Hochlaufvorgangs oder Boot-Vorgangs des elektronischen Bauteils für jede nachladbare Funktionseinheit eine zugehörige, funktionsgleiche und vertrauenswürdige Zwillingsfunktionseinheit vorgesehen. D.h. vorgegebene Teilbereiche des dynamisch rekonfigurierbaren werden mit der Zwillingsfunktionseinheiten für nachladbare Funktionseinheiten vorkonfiguriert. Während des operativen Betriebs bzw. zur Laufzeit des elektronischen Bauteils können dann nachladbare Funktionseinheiten in die durch die Schnittstellendefinitionen vorgegebenen Container des dynamisch rekonfigurierbaren Bereichs nachgeladen werden. Die jeweils geladene nachladbare Funktionseinheit und die zugehörige Zwillingsfunktionseinheit werden dann mit identen Eingangsdaten versorgt und parallel ausgeführt. Die von der nachgeladenen Funktionseinheit generierten Ausgangsdaten mit den Ausgangsdaten der zugehörigen, vertrauenswürdigen Zwillingsfunktionseinheit verglichen werden und bei einer Übereinstimmung der Ausgangsdaten die geladene, nachladbare Funktionseinheit mit den Ausgangsdaten der zugehörigen Zwillingseinheit die geladene, nachladbare Funktionseinheit freigegeben wird und ihre Ausgangsdaten für eine Weiterverarbeitung weitergeleitet werden.

Der Hauptaspekt der vorliegenden Erfindung besteht darin, dass zu jeder Funktionseinheit, welche zur Laufzeit des elektronischen Bauteils in den dynamisch rekonfigurierbaren Bereich nachgeladen werden kann, z.B. durch den Hersteller bereits in der Designphase des elektronischen Bauteils eine vertrauenswürdige, zugehörige Zwillingsfunktionseinheit vorgesehen wird. Diese Zwillingsfunktionseinheit weist beispielsweise eine mit der jeweiligen nachladbaren Funktionseinheit idente Standardfunktionalität auf - d.h. die Zwillingsfunktionseinheit weist dieselben Schnittstellen auf und wird beispielsweise beim Hochfahren bzw. Booten des elektronischen Bauteils in denselben Containertyp wie die jeweils nachladbare Funktionseinheit bzw. Hardware-Applikation geladen. Damit kann die Zwillingsfunktionseinheit dieselben Eingangsdaten wie die nachladbare Funktionseinheit verarbeiten und es können die Ausgangsdaten der Zwillingsfunktionseinheit für einen Überprüfung der Integrität der nachgeladenen Funktionseinheit auf einfache Weise und ohne großen Ressourcenaufwand herangezogen werden. D.h. die jeweilige Zwillingsfunktionseinheit stellt eine "goldene" Referenz zur Überprüfung einer korrekten und fehlerfreien Funktionsweise der jeweiligen, nachgeladenen Funktionseinheit bzw. Hardware-Applikation dar.

Weiterhin kann eine Integritätsprüfung der Hardware-Applikation mittels Prüfsumme und Verschlüsselung der zur nachladbaren Funktionseinheit zugehörigen Konfigurationsdatei entfallen oder als zusätzliche Integritätsprüfung bei Laden der Konfigurationsdatei der jeweiligen Funktionseinheit eingesetzt werden. Zusätzlich ermöglicht das erfindungsgemäße Verfahren aber auch eine Überprüfung einer nachladbaren Funktionseinheit, während diese im elektronischen Bauteil bereits im Einsatz ist, wenn diese im Verdacht steht- z.B. aufgrund von einer Beschädigung während oder nach Konfiguration des entsprechenden Containers oder aufgrund einer Manipulation - nicht funktionsgemäß zu arbeiten. Weiterhin ermöglicht das erfindungsgemäße Verfahren, dass ein Benutzer eines elektronischen Bauteils Funktionseinheiten bzw. Hardware-Applikationen von anderen Herstellern als vom Hersteller des elektronischen Bauteils nachladen kann, sofern diese Funktionseinheiten mit den Schnittstellen der entsprechenden Container zusammenpassen. Durch das erfindungsgemäße Verfahren kann dann sehr einfach nach dem Laden der entsprechenden nachladbaren Funktionseinheit als Konfigurationsdaten in den jeweiligen Container mittels der entsprechenden Zwillingsfunktionseinheit geprüft werden, ob die nachladbare Funktionseinheit eines anderen Herstellers zumindest jene Standardfunktionalität erfüllt, welche für einen ordnungsgemäßen Betrieb des elektronischen Bauteils notwendig ist.

Eine zweckmäßige Ausgestaltung der Erfindung sieht vor, dass bei einer Abweichung der Ausgangsdaten der nachladbaren Funktionseinheit von den Ausgangsdaten der zugehörigen Zwillingsfunktionseinheit die nachladbare Funktionseinheit gesperrt bzw. nicht freigegeben wird und eine Alarmmeldung ausgegeben wird. Dadurch wird ein fehlerhafte oder manipulierte, nachgeladene Funktionseinheit rasch erkannt. Weiterhin wird auf einfache Weise verhindert, dass eine manipulierte oder fehlerhafte, nachgeladene Funktionseinheit zu Fehlfunktionen und/oder Schädigung des elektronischen Bauteils führt.

Es ist weiterhin vorteilhaft, wenn zum Vergleichen die Ausgangsdaten der nachladbaren Funktionseinheit und die Ausgangsdaten der zugehörigen Zwillingsfunktionseinheit an eine Vergleichslogik weitergeleitet werden. Die Vergleichslogik wird idealerweise im dynamisch rekonfigurierbaren Bereich als statisch z.B. beim Hochfahren bzw. Booten des elektronischen Bauteils konfiguriert. Die entsprechende Konfiguration der Vergleichslogik kann z.B. bereits in der Designphase des elektronischen Bauteils festgelegt werden. Idealerweise ist die Vergleichslogik in Bezug auf einen Datenfluss zwischen den Schnittstellen für die Ausgangsdaten der Funktionseinheiten der jeweiligen Teilbereich und zumindest einer weiteren Ausgangsschnittstelle im dynamisch rekonfigurierbaren Bereich angeordnet, über welche die Ausgangsdaten einer oder mehrerer Funktionseinheiten z.B. vom dynamisch rekonfigurierbaren Bereich an weitere Einheiten, welche üblicherweise in einem statischen Bereich des elektronischen Bauteils angeordnet sind (z.B. Prozessor, CPU, Speichermanagement, etc.), weitergeleitet werden. Diese zumindest eine weitere Ausgangsschnittstelle kann z.B. ebenfalls beim Hochfahren des elektronischen Bauteils festgelegt werden und ist üblicherweise mit den jeweils vorgegebenen Schnittstellen der Container für die nachladbaren Funktionseinheiten ident.

Es ist weiterhin günstig, wenn die Ausgangsdaten der nachladbaren Funktionseinheit und die Ausgangsdaten der zugehörigen Zwillingsfunktionseinheit für eine vorgegebene Zeitdauer miteinander verglichen werden. Damit kann auf sichere Weise die Übereinstimmung der Ausgangsdaten und damit die Übereinstimmung der Funktionsweise der nachgeladenen Hardware-Applikation mit der zugehörigen Zwillingsfunktionseinheit überprüft werden.

Idealerweise wird das für den Vergleich der Ausgangsdaten der nachladbaren Funktionseinheit und der Ausgangsdaten der zugehörigen Zwillingsfunktionseinheit eine vorgegebene Testdatenabfolge als Eingangsdaten verwendet. Dabei kann beispielsweise durch eine Länge der vorgegeben Testdatensequenz die Zeitdauer des Vergleichs der Ausgangsdaten festgelegt werden. Als vorgegebenen Testdatenabfolge kann z.B. ein Testvektor verwendet werden, durch welchen eine Standardfunktionalität der nachgeladenen Funktionseinheit anhand des Vergleichs der Ausgangsdaten mit den Ausgangsdaten der zugehörigen Zwillingsfunktionseinheit überprüft werden kann.

Eine bevorzugte Ausgestaltung der Erfindung sieht vor, dass die Zwillingsfunktionseinheit, welche für jede nachladbare Funktionseinheit bzw. zumindest für jenen nachladbaren Funktionstyp konfiguriert wird, aus einem sicheren und vertrauenswürdigen Speicherbereich in den vorgegebenen Teilbereich des dynamisch rekonfigurierbaren Bereichs des elektronischen Bauteils geladen wird. D.h., dass die jeweiligen Zwillingsfunktionseinheiten beispielsweise vom Hersteller des elektronischen Bauteils oder einem vertrauenswürdigen Designhersteller in der Designphase definiert werden und z.B. gemeinsam mit der Basiskonfiguration bzw. der Konfiguration des statischen Bereichs des elektronischen Bauteils, welcher z.B. beim Booten in den elektronischen Bauteil geladen wird, gespeichert und geladen werden. Dadurch soll auch sichergestellt werden, dass die jeweiligen Zwillingsfunktionseinheiten vor böswilligen Manipulationen geschützt sind.

Weiterhin empfiehlt es sich, wenn die jeweilige Konfigurationsdatei für die jeweilige nachladbare Funktionseinheit als so genannte Bitstream- oder Bitstrom-Datei ausgeführt wird, welche zur Laufzeit des elektronischen Bauteils aus einer internen oder externen Speichereinheit (z.B. Flashspeicher, SD-Karte, herstellerspezifischen Applikationsstore) nachgeladen wird. Eine Bitstream-Datei umfasst üblicherweise eine Information zum Programmieren der programmierbaren, integrierten Schaltung bzw. entsprechender Schaltungsteile. Die Bitstream-Datei wird üblicherweise in einer Synthesephase aus einer so genannten Netzliste generiert, welche aus einem in einer Designphase erstellten Design der Schaltung bzw. Schaltungsteile abgeleitet wurde. Üblicherweise weisen derartige Bitstream-Dateien ein Format auf, welches spezifisch für den jeweiligen Hersteller des elektronischen Bauteils bzw. der programmierbaren, integrierten Schaltung ist.

Idealerweise wird als elektronische Bauteil ein so genanntes Field Programmable Gate Array oder FPGA verwendet. Mit FPGAs können auf einfache Weise - durch Laden von Konfigurationsdateien - verschiedene Schaltungen und Funktionen realisiert und flexibel geändert werden.

Alternativ kann als elektronische Bauteil ein so genanntes System-on-Chip-Field Programmable Gate Array oder SoC-FPGA verwendet werden, welchen idealerweise Prozessor- und FPGA-Architektur in einer Einheit integriert sind. Meist ist der Prozessorteil des SoC-FPGAs zweckbestimmt und statisch bzw. nicht veränderbar ausgeführt, während der FPGA-Teil zumindest teilweise dynamisch zur Laufzeit rekonfiguriert werden kann. Dadurch wird idealerweise eine höhere Integration, geringerer Energieverbrauch, eine kleinere Baugröße sowie einen größere Bandbreite für eine Kommunikation zwischen Prozessorteil und FPGA-Teil ermöglicht.

### Kurzbeschreibung der Zeichnung

Die Erfindung wird nachfolgend in beispielhafter Weise anhand der beigefügten Figuren erläutert. Es zeigen:
Figur 1 einen schematischen und beispielhaften Aufbau eines elektronischen Bauteils, welcher zur Durchführung des erfindungsgemäßen Verfahrens zur Integritätsprüfung von nachladbaren Funktionseinheiten eingerichtet ist;
Figur 2 einen beispielhaften Ablauf des erfindungsgemäßen Verfahrens zur Integritätsprüfung von nachladbaren Funktionseinheiten in einem elektrischen Bauteil;
Figur 3a und Figur 3b beispielhaft einen Datenfluss während und nach dem Ablauf des erfindungsgemäßen Verfahrens zur Integritätsprüfung von nachladbaren Funktionseinheiten in einem beispielhaften, zur Durchführung des erfindungsgemäßen Verfahrens eingerichteten, elektronischen Bauteil.

### Ausführung der Erfindung

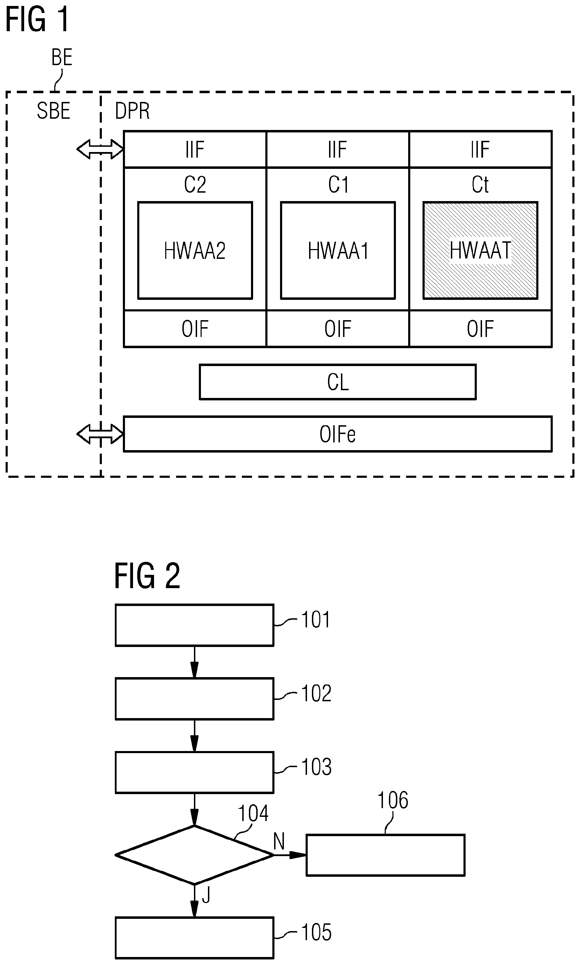

Figur 1 zeigt in schematischer Weise eine beispielhaften Aufbau bzw. eine beispielhafte Konfiguration eines elektronischen Bauteils BE, welches zur Durchführung des erfindungsgemäßen Verfahrens zur Integritätsprüfung von nachladbaren Funktionseinheiten HWAA1, HWAA2 eingerichtet ist. Das elektronische Bauteil BE ist beispielsweise als programmierbare bzw. rekonfigurierbare, integrierte Schaltung wie z.B. als so genanntes Field Programmable Gate Array oder FPGA oder als so genanntes System-on-Chip-FPGA bzw. SoC-FPGA ausgeführt.

Das in Figur 1 beispielhaft dargestellte elektronische Bauteil BE weist neben einem statischen Bereich SBE einen dynamisch rekonfigurierbaren Bereich DPR auf. In einer Designphase des elektronischen Bauteils BE kann beispielsweise festgelegt werden, welcher Bereich des elektronischen Bauteils BE dynamisch rekonfigurierbar sein soll. Im statischen Bereich SBE des elektronischen Bauteils BE können beispielsweise zumindest eine oder mehrere Prozessoreinheiten, Einheiten für ein Speichermanagement, etc. sowie eine Steuereinheit zum Nachladen der nachladbaren Funktionseinheiten bzw. Hardware-Applikationen HWAA1, HWAA2 in Form von Konfigurationsdateien und für die Rekonfiguration des dynamisch rekonfigurierbaren Bereichs DPR vorgesehen sein.

Der dynamisch rekonfigurierbare Bereich DPR stellt einen zur Laufzeit des elektronischen Bauteils BE zumindest teilweise umkonfigurierbaren Teil des elektronischen Bauteils BE dar, welcher aufgrund seiner Grundstruktur durch ein Nachladen von einzelnen Funktionseinheiten bzw. Hardware-Applikationen HWAA1, HWAA2 in Form von Konfigurationsdateien bei Bedarf verändert werden kann. Dabei kann der dynamisch rekonfigurierbare Bereich in mehrere Teilbereiche C1, C2, Ct unterteilt sein, welche auch als Container, Slots oder Partitionen bezeichnet werden können. Die Container C1, C2, Ct weisen vorgegebene Schnittstellen IIF, OIF auf, über welche beispielweise Eingangs- und Ausgangdaten (z.B. Signale, Steuersignale, Registerinhalte, etc.) mit Einheiten des statischen Teils SBE des elektronischen Bauteils BE ausgetauscht werden können. Die Unterteilung des dynamisch rekonfigurierbaren Bereichs DPR in vorgegebenen Container C1, C2, Ct sowie die Definition der Schnittstellen IIF, OIF werden z.B. ebenfalls in der Designphase des Bauteils BE z.B. vom Hersteller festgelegt und sind üblicherweise statisch.

In die vorgegebenen Teilbereiche bzw. Container C1, C2 können dann zur Laufzeit des elektronischen Bauteils BE Funktionseinheiten bzw. Hardware-Applikationen HWAA1, HWAA2 in Form von Konfigurationsdatei nachgeladen werden, durch welche dann die Funktionsweise des jeweiligen Teilbereichs C1, C2 festgelegt wird. Die Konfigurationsdateien der Hardware-Applikationen HWAA1, HWAA2 sind üblicherweise als Bitstrom- bzw. Bitstream-Dateien ausgeführt und können z.B. von einer internen oder externen Speichereinheit mit Hilfe der Steuereinheit in den jeweiligen Container C1, C2 während das Betriebs des Bauteils BE nachgeladen werden. Dabei weisen die nachladbaren Hardware-Applikationen HWAA1, HWAA2 vordefinierte Schnittstellen auf, welche mit den Schnittstellen IIF, OIF der Container C1, C2 zusammenpassen müssen. D.h. eine bestimmte nachladbare Funktionseinheit bzw. Hardware-Applikation HWAA1, HWAA2 kann nur in einen bestimmten Typ von Container C1, C2 nachgeladen werden. Dieser Containertyp C1, C2 muss die entsprechend definierten Schnittstellen IIF, OIF für die von der nachladbaren Funktionseinheit HWAA1, HWAA2 zu verarbeitenden Eingangsdaten und für die von der nachladbaren Funktionseinheit HWAA1, HWAA2 zu liefernden Ausgangsdaten aufweisen.

In dem in Figur 1 beispielhaft dargestellten, elektronischen Bauteil BE ist der dynamisch rekonfigurierbare Bereich DPR z.B. in drei beispielhafte Container C1, C2, Ct unterteilt, wobei z.B. in einen ersten und zweiten Container C1, C2 nachladbare Funktionseinheiten HWAA1, HWAA2 dynamisch geladen werden können, welche die zu den Containern C1, C2 passenden Schnittstellen aufweisen. Dabei weisen die nachladbaren Funktionseinheiten HWAA1, HWAA2 beispielsweise einen selben Funktionstyp auf - d.h. die Funktionseinheiten HWAA1, HWAA2 verarbeiten beispielsweise dieselben Eingangsdaten und liefern dieselben Ausgangsdaten. Weisen der erste und zweite Container C1, C2 z.B. dieselben entsprechenden, vordefinierten Eingangs- und Ausgangsschnittstellen IFF, OIF auf, so können die Hardware-Applikationen HWAA1, HWAA2 während der Laufzeit des elektronischen Bauteils BE je nach Verwendung des Bauteils BE in den ersten und/oder zweiten Container C1, C2 nachgeladen werden.

Im dritten beispielhaften Container Ct des dynamisch rekonfigurierbaren Bereichs DPR ist für die Durchführung des erfindungsgemäßen Verfahrens eine Zwillingsfunktionseinheit bzw. Zwillings-Hardware-Applikation HWAAT vorkonfiguriert, welche dieselbe Standardfunktionalität wie die zur Laufzeit nachladbaren Hardware-Applikationen HWAA1, HWAA2 aufweist. D.h. die logische Funktion bzw. der Algorithmus der Zwillingsfunktionseinheit HWAAT entspricht der logischen Funktion bzw. dem Algorithmus der nachladbaren Funktionseinheiten HWAA1, HWAA2. Von der Zwillingsfunktionseinheit HWAAT werden daher dieselben Eingangsdaten verarbeitet bzw. dieselben Ausgangdaten geliefert wie von den nachladbaren Funktionseinheiten HWAA1, HWAA2. Dazu weist der für die Zwillingsfunktionseinheit HWAAT vorgegebene Container Ct im dynamisch rekonfigurierbaren Bereich DPR dieselben Schnittstellen IIF, OIF für die Eingangs- und Ausgangsdaten wie der erste und zweite Container C1, C2 auf. Die Zwillingsfunktionseinheit HWAAT wird allerdings z.B. von Hersteller bereits in der Designphase definiert und durch eine Konfiguration des elektronischen Bauteils BE z.B. als fix oder statisch im dynamisch rekonfigurierbaren Bereich DPR des elektronischen Bauteils BE vorgegeben. Dadurch wird die Zwillingsfunktionseinheit HWAAT vom elektronischen Bauteil BE bzw. dessen Logik als vertrauenswürdig betrachtet.

Weiterhin weist der elektronische Bauteil BE im dynamisch rekonfigurierbaren Bereich DPR eine Vergleichslogik CL auf. Die Vergleichslogik CL kann ebenfalls in der Designphase als nicht veränderbarer bzw. fixer Teilbereich im dynamisch rekonfigurierbaren Bereich DPR - ähnlich den Schnittstellen IIF, OIF der Container C1, C2, Ct - vorgegeben werden. Mittels der Vergleichslogik CL können die Ausgangsdaten eine zu Laufzeit nachgeladenen Funktionseinheit HWAA1, HWAA2 mit den Ausgangsdaten der entsprechenden, vorgegebenen Zwillingsfunktionseinheit HWAAT verglichen werden. Die Vergleichslogik CL ist dabei in Bezug auf einen Datenfluss zwischen den Ausgangsschnittstellen OIF der Container C1, C2, Ct und einer weiteren Ausgangsschnittstelle OIFe angeordnet, über welche z.B. Ausgangsdaten vom dynamisch rekonfigurierbaren Bereich DPR an die Einheiten im statischen Bereich SBE weitergeleitet werden. Dabei können die Ausgangsdaten der nachladbaren Funktionseinheiten HWAA1, HWAA2 über die Ausgangsschnittstellen OIF der zugehörigen Container C1, C2 entweder an die Vergleichslogik CL oder nach erfolgter Integritätsprüfung direkt an die Ausgangsschnittstelle OIFe geleitet werden. Die Ausgangsschnittstelle OIF des Containers Ct der Zwillingsfunktionseinheit HWAAT kann beispielsweise für die Integritätsprüfung sowohl mit der Vergleichslogik CL als auch direkt mit der Ausgangsschnittstelle OIFe verbunden werden.

Figur 2 zeigt einen beispielhaften Ablauf des erfindungsgemäßen Verfahren zur Integritätsprüfung von nachladbaren Funktionseinheiten in einem elektrischen Bauteil BE mit einem dynamisch rekonfigurierbaren Bereich DPR, welcher zumindest einen Teilbereich bzw. Container C1, C2 aufweist, in welchen zur Laufzeit des elektronischen Bauteils BE eine entsprechende nachladbare Funktionseinheit HWAA1, HWAA2 in Form einer Konfigurationsdatei nachgeladen werden kann.

Für das erfindungsgemäße Verfahren werden in einem Konfigurationsschritt 101 vorgegebene Teilbereiche Ct des dynamisch rekonfigurierbaren Bereich DPR mit Zwillingsfunktionseinheiten HWAAT belegt, welche dieselbe Funktionalitäten wie die zur Laufzeit des elektronischen Bauteils BE nachladbaren Funktionseinheiten HWAA1, HWAA2 aufweisen. Das bedeutet, im Konfigurationsschritt 101 wird für jede nachladbare Funktionseinheit bzw. Hardware-Applikation HWAA1, HWAA2 ein vorgegebener Teilbereich bzw. Container Ct mit einer zugehörigen Zwillingsfunktionseinheit HWAAT konfiguriert, wobei die Belegung der Teilbereiche bzw. Container Ct im den jeweiligen Zwillingsfunktionseinheiten HWAAT statisch (d.h. während der Laufzeit des elektronischen Bauteils BE nicht veränderbar und z.B. vom Hersteller vorgegeben ist. Die jeweiligen Zwillingsfunktionseinheiten HWAAT werden dabei beispielsweise z.B. während einer Bootphase des elektronischen Bauteils BE in Form von entsprechenden Konfigurationsdateien oder mit einer Konfiguration für das elektronische Bauteil BE aus einem abgesicherten und vertrauenswürdigen Speicherbereich in die jeweils vorgegebenen Container Ct geladen. Die Ausgangsschnittstelle OIF des Containers Ct der Zwillingsfunktionseinheit HWAAT kann beispielsweise für die Integritätsprüfung sowohl mit einer Vergleichslogik CL als auch direkt mit der Ausgangsschnittstelle OIFe zur Weiterleitung von Daten an andere Einheiten des elektronischen Bauteils BE verbunden sein.

In einem Ladeschritt 102, welcher während der Laufzeit bzw. des operativen Betriebs des elektronischen Bauteils BE ausgeführt wird, werden eine oder mehrere nachladbare Funktionseinheiten HWAA1, HWAA2 in die entsprechenden Teilbereiche bzw. Container C1, C2 des dynamisch rekonfigurierbaren Teils DPR des elektronischen Bauteils BE geladen. D.h. eine Funktionseinheit HWAA1, HWAA2 wird aus einer meist externen Speichereinheit (z.B. Flashspeicher, SD-Karte, herstellerspezifischen Applikationsstore) in Form einer Konfigurationsdatei - d.h. in Form einer Bitstream-Datei - in einen Teilbereich bzw. Container C1, C2 des dynamisch rekonfigurierbaren Bereichs DPR geladen, welche die für die Funktionseinheit HWAA1, HWAA2 passenden Schnittstellen IIF, OIF für Eingangs- und Ausgangsdaten aufweist. Dann wird der Container C1, C2 mit die Konfigurationsdatei der geladenen nachladbaren Funktionseinheit HWAA1, HWAA2 entsprechend konfiguriert, um im elektronischen Bauteil BE die ablauffähige, nachladbare Funktionseinheit HWAA1, HWAA2 für den laufenden Betrieb verfügbar zu machen. Weiterhin wird beispielsweise eine Ausgangsschnittstelle OIF des Containers C1, C2 der nachgeladenen Funktionseinheit HWAA1, HWAA2 vorerst nur mit der Vergleichslogik CL verbunden.

Für einen Ausführschritt 103 werden die nachgeladenen Funktionseinheit HWAA1, HWAA2 sowie die zugehörige Zwillingseinheit HWAAT zurückgesetzt und gestartet. Im Ausführschritt 103 werden die geladene nachladbare Funktionseinheit HWAA1, HWAA2 und ihre zugehörige Zwillingseinheit HWAAT dann parallel ausgeführt und dabei mit denselben Eingangsdaten über die jeweilige Eingangsschnittstelle IIF des jeweiligen Container C1, C2, Ct versorgt. Als Eingangsdaten können beispielsweise die während eines normalen Betriebs des elektronischen Bauteils BE anfallenden Eingangsdaten sein. Idealerweise wird für die Integritätsprüfung einen vorgegebenen Testdatenabfolge (z.B. Testsequenz, Testvektor, etc.) verwendet.

Während des Ausführschritts 103 werden dann von der geladenen nachladbaren Funktionseinheit HWAA1, HWAA2 und der zugehörigen Zwillingsfunktionseinheit HWAAT entsprechend ihrer Funktionalität bzw. entsprechend dem realisierten Algorithmus Ausgangsdaten generiert. Diese Ausgangsdaten werden dann in einem Vergleichsschritt 104 miteinander verglichen. Dazu werden die Ausgangsdaten der nachgeladenen Funktionseinheit HWAA1, HWAA2 und die Ausgangsdaten der zugehörigen, funktionsgleichen Zwillingsfunktionseinheit HWAAT der Vergleichslogik CL zugeführt, welche ebenfalls im dynamisch rekonfigurierbaren Bereich DPR vorgesehen ist. Um sicherzugehen, dass die nachgeladene Funktionseinheit HWAA1, HWAA2 ihre Funktionalität wie erwartet ausgeführt wird, kann für den Vergleich mit den Ausgangsdaten der zugehörigen Zwillingsfunktionseinheit HWAAT eine Zeitdauer vorgegebenen werden, während der die Ausgangsdaten der nachgeladenen Funktionseinheit HWAA1, HWAA2 mit den Ausgangsdaten übereinstimmen sollten. Diese Zeitdauer kann beispielsweise durch die Länge der vorgegebenen Testdatenabfolge bestimmet werden.

Wird von der Vergleichslogik CL im Vergleichsschritt 104 beispielsweise für die Dauer der vorgegebenen Zeitdauer eine Übereinstimmung zwischen den Ausgangsdaten der geladenen nachladbaren Funktionseinheit HWAA1, HWAA2 und der zugehörigen, funktionsgleichen Zwillingsfunktionseinheit HWAAT festgestellt, so wird die zur Laufzeit nachgeladene Funktionseinheit HWAA1, HWAA2 in einem Freigabeschritt 105 freigegeben. D.h. die Ausgabedaten der Funktionseinheit HWAA1, HWAA2 werden dann z.B. direkt an die Ausgangsschnittstelle OIFe zur Weiterleitung von Daten an andere Einheiten des elektronischen Bauteils BE weitergeleitet werden. Eine Verbindung der Funktionseinheit HWAA1, HWAA2 zur Vergleichslogik CL kann beispielsweise getrennt werden und stattdessen eine entsprechende Verbindung zur Ausgangsschnittstelle OIFe zur Weiterleitung von Daten an andere Einheiten des elektronischen Bauteils BE aufgebaut werden.

Weiterhin können die Verbindungen der zugehörigen Zwillingsfunktionseinheit HWAAT zur Vergleichslogik CL und zur Ausgangsschnittstelle OIFe zur Weiterleitung von Daten an andere Einheiten des elektronischen Bauteils BE ebenfalls getrennt werden. Alternativ kann die Zwillingsfunktionseinheit HWAAT mit der Ausgangsschnittstelle OIFe zur Weiterleitung von Daten an andere Einheiten des elektronischen Bauteils BE in Verbindung bleiben. Nach dem Freigabeschritt 105 kann die Zwillingsfunktionseinheit HWAAT für weitere Integritätsprüfungen von nachgeladenen Funktionseinheiten HWAA1, HWAA2 mit gleicher Funktionalität verwendet werden.

Wird im Vergleichsschritt 104 einen Abweichung der Ausgangsdaten der geladenen nachladbaren Funktionseinheit HWAA1, HWAA2 von den Ausgangsdaten der entsprechenden Zwillingsfunktionseinheit HWAAT - z.B. während der vorgegebenen Zeitdauer - festgestellt, so wird in einem Alarmierungsschritt 106 die geladene nachladbare Funktionseinheit HWAA1, HWAA2 gesperrt bzw. nicht freigegebenen. Weiterhin kann im Alarmierungsschritt 106 eine Alarm- oder Fehlermeldung ausgegeben werden, durch welche die fehlgeschlagene Integritätsprüfung der Funktionseinheit HWAA1, HWAA2 aufmerksam gemacht wird.

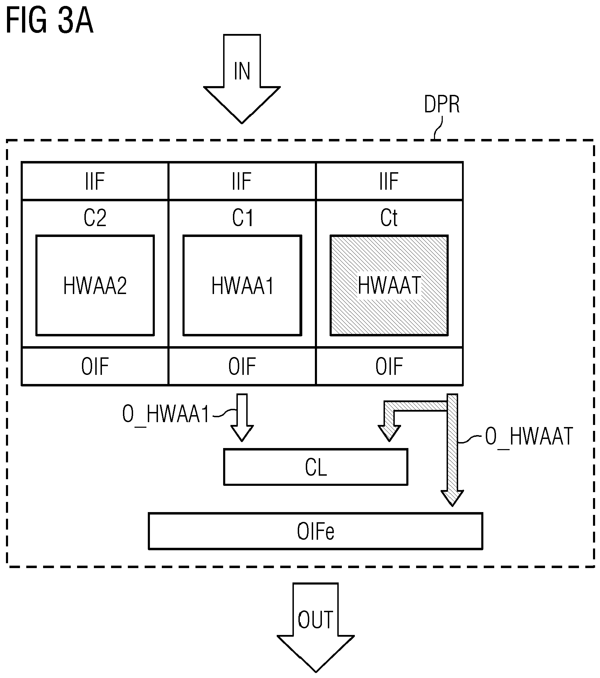

Eine beispielshafte Darstellung eines Datenflusses während des Ausführungsschritts 103 und des darauffolgenden Vergleichsschritts 104 wird in Figur 3a anhand des dynamisch rekonfigurierbaren Bereichs DPR des in Figur 1 beispielhaft und schematisch dargestellten elektronischen Bauteils BE gezeigt, welcher zur Durchführung des erfindungsgemäßen Verfahrens eingerichtet ist. Für die Integritätsprüfung ist im Container Ct einen Zwillingsfunktionseinheit HWAAT vorgesehen, welche dieselbe Standardfunktionalität wie eine zur Laufzeit des Bauteils BE in den ersten Container C1 nachgeladene Funktionseinheit HWAA1 aufweist.

Im Ausführungsschritt 103 werden über die jeweilige Eingangsschnittstelle IIF der nachgeladenen Funktionseinheit HWAA1 und der zugehörigen Zwillingsfunktionseinheit HWAAT idente bzw. dieselben Eingangsdaten IN (z.B. Testsequenz, Testvektor) zugeführt, welche von der Funktionseinheit HWAA1 und der Zwillingsfunktionseinheit HWAAT parallel verarbeitet werden. Die Funktionseinheit HWAA1 erzeugt auf Basis der Eingangsdaten IN gemäß ihrer Funktionalität die Ausgangsdaten O_HWAA1, welche über die Ausgangsschnittstelle OIF des Containers C1 an die Vergleichslogik CL weitergeleitet werden. Die Zwillingsfunktionseinheit HWAAT erzeugt aus den Eingangsdaten IN entsprechend ihrer Funktionalität, welche der Funktionalität der Funktionseinheit HWAA1 entspricht, die Ausgangsdaten O_HWAAT. Die Ausgangsdaten O_HWAAT der Zwillingsfunktionseinheit HWAAT werden dabei über die Ausgangsschnittstelle OIF sowohl an die Vergleichslogik CL als auch direkt an die Ausgangsschnittstelle OIFe des dynamisch rekonfigurierbaren Bereichs DPR bzw. von dort als Ausgangsdaten OUT an Systemeinheiten des elektronischen Bauteils BE weitergeleitet, welche z.B. im statischen Bereich SBE angeordnet sind.

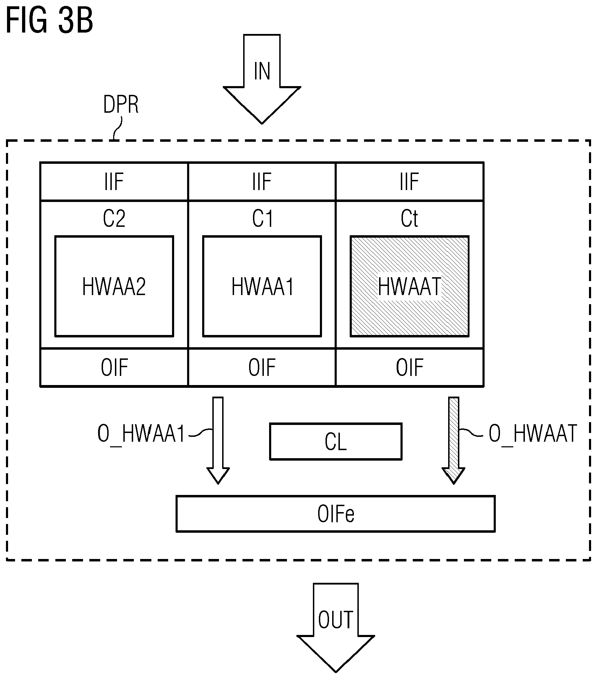

Im Vergleichsschritt 104 werden von der Vergleichslogik die Ausgangsdaten O_HWAA1 der nachgeladenen Funktionseinheit HWAA1 und die Ausgangsdaten O_HWAAT der zugehörigen Zwillingsfunktionseinheit HWAAT verglichen. Bei Übereinstimmung der jeweiligen Ausgangsdaten O_HWAA1, O_HWAAT erfolgt im Freigabeschritt 105 eine Veränderung des Datenflusses - durch die Freigabe der geladenen, nachladbaren Funktionseinheit HWAA1. Ein beispielhafter Datenfluss nach Freigabe der geladenen, nachladbaren Funktionseinheit HWAA1 anhand des dynamisch rekonfigurierbaren Bereichs DPR des in Figur 1 beispielhaft und schematisch dargestellten elektronischen Bauteils BE gezeigt, welcher zur Durchführung des erfindungsgemäßen Verfahrens eingerichtet ist, ist in Figur 3b dargestellt.

Nach Freigabe der geladenen, nachladbaren Funktionseinheit HWAA1 wird diese direkt an die Ausgangsschnittstelle OIFe des dynamisch rekonfigurierbaren Bereichs DPR bzw. von dort an Systemeinheiten des elektronischen Bauteils BE angebunden. Die im Ladeschritt 102 erstellte Verbindung zur Vergleichslogik CL wird getrennt. D.h. die aus den Eingangsdaten IN von der Funktionseinheit HWAA1 erzeugten Ausgangsdaten O_HWAA1 werden nun direkt als Ausgangsdaten OUT an die Systemeinheiten des elektronischen Bauteils BE weitergeleitet, da die Integrität der Funktionseinheit HWAA1 überprüft und festgestellt wurde. Weiterhin wird die Verbindung der zur Funktionseinheit HWAA1 zugehörigen Zwillingsfunktionseinheit HWAAT zur Vergleichslogik CL getrennt. Zusätzlich kann auch die Verbindung der Zwillingseinheit HWAAT zur Ausgangsschnittstelle OIFe des dynamisch rekonfigurierbaren Bereichs DPR bzw. von dort zu Systemeinheiten des elektronischen Bauteils BE getrennt werden. Alternativ kann diese Verbindung - wie beispielhaft in Figur 3b dargestellt - allerdings auch beibehalten werden. Die vertrauenswürdige Zwillingseinheit HWAAT kann nun für weitere Integritätsprüfungen von in den dynamisch rekonfigurierbaren Bereich DPR des elektronischen Bauteil BE nachladbaren Funktionseinheiten HWAA1, HWAA2, welche dieselbe Standardfunktionalität wie die Zwillingsfunktionseinheit HWAAT aufweisen, eingesetzt werden.

## Patentansprüche

1. Verfahren zur Integritätsprüfung von nachladbaren Funktionseinheiten (HWAA1, HWAA2), welche in Form von Konfigurationsdateien während einer Laufzeit eines elektronischen Bauteils (BE), welcher als programmierbare, integrierte Schaltung ausgeführt ist, in Teilbereiche (C1, C2) eines dynamisch rekonfigurierbaren Bereichs (DPR) des elektronischen Bauteils (BE) nachgeladen werden, wobei die nachladbaren Funktionseinheiten (HWAA1, HWAA2) vordefinierte Schnittstellen aufweisen, welche mit entsprechenden Schnittstellen (IIF, OFF) jener Teilbereiche (C1, C2) des dynamisch rekonfigurierbaren Bereichs (DPR) des elektronischen Bauteils (BE) zusammenpassen, in welche die nachladbaren Funktionseinheiten (HWAA1, HWAA2) geladen werden können, ***dadurch gekennzeichnet, dass:***
- für jede nachladbare Funktionseinheit (HWAA1, HWAA2) ein vorgegebener Teilbereich (Ct) des dynamisch rekonfigurierbaren Bereichs (DPR) mit einer entsprechenden, zugehörigen, funktionsgleichen Zwillingsfunktionseinheit (HWAAT) vorkonfiguriert wird (101);
- dass eine nachladbare Funktionseinheit (HWAA1) in einen vorgegebenen Teilbereich (C1, C2) des dynamisch rekonfigurierbaren Bereichs (DPR) zur Laufzeit des elektronischen Bauteils (BE) geladen wird (102);
- dass die geladene nachladbare Funktionseinheit (HWAA1) und die zugehörige Zwillingsfunktionseinheit (HWAAT) mit identen Eingangsdaten (IN) versorgt und parallel ausgeführt werden (103);
- dass die Ausgangsdaten (0_HWAA1) der geladenen nachladbaren Funktionseinheit (HWAA1) und die Ausgangsdaten (O_HWAAT) der zugehörigen Zwillingsfunktionseinheit (HWAAT) verglichen werden (104);
- und dass die geladene nachladbare Funktionseinheit (HWAA1) freigegeben wird und die Ausgangsdaten (O_HWAA1) der geladene, nachladbaren Funktionseinheit (HWAA1) weitergeleitet werden (105), wenn eine Übereinstimmung der Ausgangsdaten (O_HWAA1) der nachladbaren Funktionseinheit (HWAA1) mit den Ausgangsdaten (O_HWAAT) der zugehörigen Zwillingsfunktionseinheit (HWAAT) festgestellt wird.

2. Verfahren nach Anspruch 1, ***dadurch gekennzeichnet, dass*** bei einer Abweichung der Ausgangsdaten (O_HWAA1) der geladenen nachladbaren Funktionseinheit (HWAA1) von den Ausgangsdaten (O_HWAAT) der zugehörigen Zwillingsfunktionseinheit (HWAAT) die geladene nachladbare Funktionseinheit (HWAA1) gesperrt und eine Alarmmeldung ausgegeben wird (106).

3. Verfahren nach einen der Ansprüche 1 bis 2, ***dadurch gekennzeichnet, dass*** für einen Vergleich die Ausgangsdaten (O_HWAA1) der nachladbaren Funktionseinheit (HWAA1) und die Ausgangsdaten (O_HWAAT) der zugehörigen Zwillingsfunktionseinheit (HWAAT) an eine Vergleichslogik (CL) weitergeleitet werden (104).

4. Verfahren nach Anspruch 3, ***dadurch gekennzeichnet, dass*** die Vergleichslogik (CL) im dynamisch rekonfigurierbaren Bereich (DPR) des elektronischen Bauteils (BE) statisch konfiguriert wird (101).

5. Verfahren nach einem der vorangegangenen Ansprüche, **dadurch gekennzeichnet, dass** die Ausgangsdaten (O_HWAA1) der nachladbaren Funktionseinheit (HWAA1) und die Ausgangsdaten (O_HWAAT) der zugehörigen Zwillingsfunktionseinheit (HWAAT) für eine vorgegebene Zeitdauer miteinander verglichen werden (104).

6. Verfahren nach einem der vorangegangenen Ansprüche, **dadurch gekennzeichnet, dass** das für den Vergleich der Ausgangsdaten (O_HWAA1) der nachladbaren Funktionseinheit (HWAA1) und der Ausgangsdaten (O_HWAAT) der zugehörigen Zwillingsfunktionseinheit (HWAAT) eine vorgegebene Testdatenabfolge als Eingangsdaten (IN) verwendet wird (104).

7. Verfahren nach einem der vorangegangenen Ansprüche, **dadurch gekennzeichnet, dass** die Zwillingsfunktionseinheit (HWAAT), welche für jede nachladbare Funktionseinheit (HWAA1, HWAA2) konfiguriert wird, aus einem abgesicherten und vertrauenswürdigen Speicherbereich in den vorgegebenen Teilbereich (Ct) des dynamisch rekonfigurierbaren Bereichs (DPR) des elektronischen Bauteils (BE) geladen wird (101).

8. Verfahren nach einem der vorangegangenen Ansprüche, **dadurch gekennzeichnet, dass** die jeweilige Konfigurationsdatei für die jeweilige nachladbare Funktionseinheit (HWAA1, HWAA2) als so genannte Bitstream- oder Bitstrom-Datei ausgeführt wird, welche zur Laufzeit des elektronischen Bauteils (BE) aus einer internen oder externen Speichereinheit nachgeladen wird (102).

9. Verfahren nach einem der Ansprüche 1 bis 8, ***dadurch gekennzeichnet, dass*** als elektronische Bauteil (BE) ein so genanntes Field Programmable Gate Array oder FPGA verwendet wird.

10. Verfahren nach einem der Ansprüche 1 bis 8, ***dadurch gekennzeichnet, dass*** als elektronische Bauteil (BE) ein so genanntes System-on-Chip-Field Programmable Gate Array oder SoC-FPGA verwendet wird.
